# EUROPÄISCHE PATENTSCHRIFT

(11) **EP 2 564 109 B1**
(45) Veröffentlichungstag und Bekanntmachung des Hinweises auf die Patenterteilung: **02.04.2014**
(21) Anmeldenummer: 10744900.1
(22) Anmeldetag: 09.08.2010
(51) Int. Cl.: F17C 1/00, F17C 1/02

(54) **DRUCKBEHÄLTER**
PRESSURE VESSEL
RÉCIPIENT SOUS PRESSION

(30) Priorität: 26.04.2010 DE 102010028174
(43) Veröffentlichungstag der Anmeldung: 06.03.2013
(73) Patentinhaber: Ed. Züblin AG, 70567 Stuttgart (DE)
(72) Erfinder: NIKLASCH, Christoph, 71139 Ehningen (DE); MAYER, Peter-Michael, 70192 Stuttgart (DE); HÖRRLE, Dominik, 76703 Kraichtal (DE); BROSIG, Stefan, 70563 Stuttgart (DE)
(86) Internationale Anmeldenummer: PCT/EP2010/061533
(87) Internationale Veröffentlichungsnummer: WO 2011/134537

(56) Entgegenhaltungen:
- DE-A1- 1 957 950
- DE-A1- 2 603 440
- DE-A1-102006 022 783
- GB-A- 744 407
- JP-A- 59 208 297

## Beschreibung

### Technisches Gebiet

Die Erfindung betrifft einen Druckbehälter gemäß dem Oberbegriff des Anspruchs 1, insbesondere einen solchen vorzugsweise mit einem Betonmantel hergestellten Druckbehälter, welcher beispielsweise als Wärmetauscher ausgestaltet sein kann und hierzu Wärmespeichermittel zur Entnahme und Wiederabgabe von Wärme aus bzw. an ein im Inneren des Druckbehälters enthaltenes und/oder diesen durchströmendes Fluid beherbergen kann.

### Stand der Technik

Anlagen zur Energieerzeugung und/oder zur Energiespeicherung weisen meist einen oder mehrere Druckbehälter beispielsweise als Speicher für ein prozesstechnisch benötigtes Fluid und/oder zur Beherbergung einer oder mehrerer beispielsweise mit einem prozesstechnisch benötigten Fluid umgehender technischer Einrichtungen der Anlage auf.

Beispiele für solche Anlagen sind Kraftwerke, beispielsweise grundlastfähige Atomkraftwerke, oder Energiespeicher, beispielsweise spitzenlastfähige Speicherkraftwerke, insbesondere Druckluftspeicherkraftwerke.

Ein Druckbehälter einer solchen Anlage kann wenigstens als Teil eines Druckspeichers für ein in der Anlage prozesstechnisch benötigtes Fluid, beispielsweise ein Arbeitsfluid, dienen. Ein Druckbehälter einer solchen Anlage kann aber auch dazu dienen, zumindest eine mit einem unter Druck stehenden prozesstechnisch benötigten Fluid kommunizierende und/oder umgehende technische Einrichtung der Anlage zu beherbergen. Beispiele für solche Einrichtungen sind ein Kernreaktor eines Atomkraftwerks oder Wärmespeichermittel eines Druckluftspeicherkraftwerks oder ein beispielsweise als Rekuperator ausgeführter Wärmetauscher eines Druckluftspeicherkraftwerks.

In der DE-A-2 603 440 wird ein Druckbehälter eines Hochtemperaturreaktors eines Kernkraftwerks beschrieben, der auf seiner Außenseite Fortsätze aufweist, die außen polygonartig von Spanngliedern umgeben sind, die den Druckbehälter durch Vorspannung zusammenhalten.

Dabei stellt ein Druckluftspeicherkraftwerk kein Kraftwerk im herkömmlichen Sinne dar, da bei der Verdichtung der Luft mehr Energie aufgewandt werden muss, als bei deren Entspannung wieder entnommen werden kann. Ein Druckluftspeicherkraftwerk ist demnach vielmehr ein Energiespeicher mit einem oder mehreren Druckluftspeichern und angeschlossener Turbine und Generator zur Bereitstellung elektrischen Stroms zu Zeiten der Spitzenlast.

Im Unterschied zu einem für den gleichen Einsatzzweck entwickelten Pumpspeicherkraftwerk, bei dem zu Schwachlastzeiten in einen hoch gelegenen Speichersee gepumptes Wasser über Fallrohre nach unten fließt und dabei mittels einer oder mehrerer Turbinen einen oder mehrere Generatoren antreibt, nutzt ein Druckluftspeicherkraftwerk die Energie, die in verdichteter bzw. komprimierter Luft steckt. In Schwachlastzeiten wird hierbei mit einem elektrisch angetriebenen Verdichter Luft verdichtet und in einem Druckluftspeicher gespeichert, beispielsweise in einer unterirdischen Kaverne oder Mine. In Zeiten hoher Stromnachfrage bei Spitzenlast wird die Druckluft aus dem Druckluftspeicher entnommen und in einer Turbine entspannt, die ihre Leistung an einen gekoppelten Generator abgibt.

Bekannte Probleme von Druckluftspeicherkraftwerken sind deren hohe Verluste durch beabsichtigte und unbeabsichtigte Wärmeabgabe bei der Erzeugung und Speicherung der Druckluft sowie die Gefahr der Vereisung der Turbine bei der Entspannung der Druckluft. Die Gründe hierfür sind folgende:
- Die Verdichtung bzw. Kompression der Luft führt zu einer Erhöhung von deren Temperatur. Näherungsweise kann hierbei von einer adiabatischen Zustandsänderung ausgegangen werden, bei der die vom Verdichter an der Luft verrichtete Arbeit direkt die innere Energie der Luft und damit deren Temperatur erhöht. Wie von Turbomaschinen, z.B. von Turboluftfahrtantrieben, bekannt, können hierbei je nach thermodynamischem Ausgangszustand der Luft, Verdichterleistung und Gesamtdruckverhältnis aller Stufen des Verdichters Temperaturen von weit über 1000°C erreicht werden. Um die Komponenten der Anlage vor diesen Temperaturen zu schützen ist bekannt, die Temperatur der verdichteten Luft über beispielsweise kühlmitteldurchströmte Wärmetauscher an die Umgebung abzugeben.
- Abhängig von der Dauer des Verbleibs der verdichteten Luft bis zu deren Wiederentnahme im Druckluftspeicher findet eine Abgabe eines Teils der Wärme über die Wandungen des Druckluftspeichers an die Umgebung statt. Ist der Druckluftspeicher beispielsweise eine Kaverne oder eine Mine wird die Wärme an das umgebende Mineral bzw. Gestein abgegeben.
- Die Luft kühlt bei der Expansion in der Turbine stark ab. Hierdurch kann in der Luft enthaltene Restfeuchtigkeit gefrieren und die Turbine vereisen. Um dies zu verhindern muss die Luft vor oder während der Entspannung erwärmt werden, beispielsweise durch Zuheizen mittels Erdgas.

Um diese Verluste zu beschränken, ist bekannt, bei der Entnahme von Luft aus dem Druckluftspeicher einen Brennstoff, z.B. Erdgas, beizumengen. Das Brennstoff-Luft-Gemisch wird vor dem Eintritt in eine Gasturbine entzündet, welche den Generator antreibt. Zur verbesserten Ausschöpfung des Brennwerts des Brennstoff-Luft-Gemischs ist außerdem bekannt, die Restwärme der der Gasturbine entweichenden Abgase mittels eines Rekuperators der aus dem Druckluftspeicher entnommenen Luft noch vor deren Eintritt in die Gasturbine zuzuführen.

Darüber hinaus sind so genannte adiabatische Druckluftspeicherkraftwerke bekannt, bei denen zumindest zum Teil die bei der Verdichtung der Luft erzeugte Wärme unter Abkühlung der verdichteten Luft bei deren Zufuhr zum Druckluftspeicher einem Wärmespeicher zugeführt wird und der Wärmespeicher bei der Entnahme der Druckluft aus dem Druckluftspeicher wieder entladen wird, indem die in dem Wärmespeicher gespeicherte Wärme der unter Entspannung durch die Turbine strömenden Luft wieder zugeführt wird. Bei der Entnahme aus dem Druckluftspeicher durchströmt die komprimierte Luft hierbei den Wärmespeicher, erhitzt sich und gelangt erst dann in die Turbine. Dadurch wird weniger oder idealerweise kein Brennstoff zur Erwärmung der Luft benötigt. Während der Expansion in der Turbine kühlt die Luft auf Umgebungstemperatur ab. Ein adiabatisches Druckluftspeicherkraftwerk erreicht so im Vergleich zu einem zuvor beschriebenen Druckluftspeicherkraftwerk mit Gasturbine einen höheren Wirkungsgrad.

Ein als ein Wärmespeicher für ein adiabatisches Druckluftspeicherkraftwerk ausgeführter und für diesen Zweck Wärmespeichermittel beherbergender Druckbehälter ist durch EP 1 857 614 A2 bekannt. Der Druckbehälter dieses Wärmespeichers weist einen vorgespannten Betonmantel aus hochfestem Beton mit Stahlkappe auf. Die Vorspannung erfolgt horizontal und vertikal bevorzugt durch Spannglieder aus Kohlefasern. Eine hitzebeständige Schicht und eine erste thermisch isolierende Schicht trennen das Wärmespeichermaterial vom temperaturempfindlicheren Beton. Zwischen der ersten thermisch isolierenden Schicht und dem Betonmantel bzw. der Stahlkappe kann sich darüber hinaus noch eine zweite thermisch isolierende Schicht befinden, falls die erste thermisch isolierende Schicht nicht selbst in ausreichendem Maße thermisch isolierend wirkt. Bei der zweiten thermisch isolierenden Schicht kann es sich um eine Luftschicht handeln. Zur Kühlung der Innenseite des Betonmantels kann darüber hinaus in dem Betonmantel auch noch ein Kühlmittelkreislauf vorgesehen sein. Bei dem verwendeten Kühlmittel handelt es sich bevorzugt um Wasser. Nachteilig an dem Druckbehälter dieses Wärmespeichers ist, dass eine gleichmäßige Übertragung der Vorspannung, insbesondere der horizontal in Umfangsrichtung umlaufend verlaufenden Spannglieder, auf den Betonmantel sichergestellt werden muss, um einem lokalen Versagen durch den im Inneren herrschenden Druck zu entgegenzuwirken. Eine gleichmäßige Übertragung bzw. Einleitung der durch die horizontal in Umfangsrichtung umlaufend verlaufenden Spannglieder erzeugten Vorspannung auf bzw. in den Betonmantel setzt eine geringe zwischen den Spanngliedern und dem Betonmantel wirkende Reibungskraft voraus, so dass die umlaufenden Spannglieder über den gesamten Umfang hinweg leicht verschieblich bleiben. Die noch so geringe Reibungskraft potenziert sich hierbei jedoch gemäß den Gesetzen der technischen Mechanik durch die vollständige Umschlingung des Betonmantels in Umfangsrichtung, wodurch es bereits durch geringe Reibungskräfte zu einer erheblichen Einschränkung der Verschiebbarkeit der Spannglieder in Umfangsrichtung und damit zu Unterschieden in der Übertragung bzw. Einleitung der Vorspannung über den Umfang hinweg kommt. Darüber hinaus sind die Spannglieder wegen der vorherrschenden Reibungskräfte und der thermischen und mechanischen Wechselbeanspruchungen des Druckbehälters einem hohen Verschleiß oder zumindest einer hohen Verschleißgefahr ausgesetzt. Unter anderem wegen der genannten Gründe existieren für den beschriebenen Wärmespeicher noch keine zugelassenen Spannglieder aus Kohlefasern. Darüber hinaus sind solche umlaufenden Spannglieder aus Kohlefasern kostspielig und teuer in deren Herstellung.

Abgesehen von den hohen Herstellungskosten für umlaufende Spannglieder aus Kohlefasern sind die beschriebenen Probleme sämtlichen für einen eingangs erwähnten Zweck vorgesehen bekannten Druckbehältern mit einem Betonmantel gemein.

### Aufgabe der Erfindung

Der Erfindung liegt die Aufgabe zugrunde, einen Druckbehälter zu entwickeln, bei dem ausgehend vom Stand der Technik die Gefahr eines beispielsweise lokalen Versagens des Betonmantels verringert ist und der darüber hinaus mit einfachen Mitteln kostengünstig hergestellt werden kann.

### Darstellung der Erfindung

Die Aufgabe wird gelöst durch einen Druckbehälter mit den Merkmalen des Anspruchs 1.

Demnach ist ein Druckbehälter mit einem Behälterkopf, einem Behälterfuß und wenigstens einer hohlzylinderförmigen Behälterpartie zwischen Behälterkopf und Behälterfuß vorgesehen.

Unter dem Begriff hohlzylinderförmig werden hierbei bestimmte Formen geometrischer Körper zusammengefasst:
- sie weisen einen Mantel auf, der ein Volumen einschließt,
- sie weisen eine Zylinderachse auf, die aus den Mittelpunkten benachbart aufeinanderfolgender paralleler Querschnittsebenen gebildet ist,
- diese Zylinderachse kann gerade oder gekrümmt verlaufen,
- die Querschnittsgeometrien können entlang der Zylinderachse gleichmäßig oder veränderlich sein.
- Beispiele für derartige geometrische Körper sind sowohl gerade oder schiefe allgemeine Zylinder, Kegel, Kegelstumpfe, Kugeln, Kugelabschnitte, eiförmige Objekte, Ellipsoide und Prismen im Speziellen, als auch Rotationskörper im allgemeinen. Darüber hinaus sind auch Rotationskörper um gekrümmt verlaufende Kurven eingeschlossen.
- Der Begriff der Zylinderachse schließt dabei gerade oder gekrümmt verlaufende Kurven mit ein, welche durch die Mittelpunkte paralleler Querschnittsebenen durch die geometrische Form gebildet werden.

Die Zylinderachse der hohlzylinderförmigen Behälterpartie erstreckt sich dabei vom Behälterkopf entlang der Achse des Druckbehälters bis zum Behälterfuß. Behälterkopf und Behälterfuß verschließen einen von der hohlzylinderförmigen Behälterpartie umschlossenen Behälterinnenraum. Zumindest die hohlzylinderförmige Behälterpartie besteht wenigstens aus einem vorzugsweise zumindest in Umfangsrichtung schlaff bewehrten Betonmantel. In einem normal zur Zylinderachse verlaufenden Querschnitt weist die hohlzylinderförmige Behälterpartie darüber hinaus mindestens drei gleichmäßig über den Umfang verteilt radial von der Zylinderachse weg nach außen auf dem Umfang des Betonmantels aufstehende Fortsätze auf. Besonders bevorzugt handelt es sich hierbei um eine gerade Anzahl von Fortsätzen. Die Fortsätze sind zumindest derart weit bzw. lang auf dem Umfang des Betonmantels aufstehend ausgebildet, dass zumindest vom freien Ende jeden Fortsatzes aus zumindest die freien Enden der beiden in Umfangsrichtung unmittelbar benachbarten Fortsätze in gerader Linie über die beispielsweise konvex gewölbte Mantelfläche des Betonmantels hinweg sichtbar sind. Zwischen in Umfangsrichtung mittelbar oder unmittelbar benachbarten Fortsätzen sind lineare Spannglieder gespannt, welche die hohlzylinderförmige Behälterpartie unter eine in Umfangsrichtung und gegen einen Überdruck im Behälterinnenraum gegenüber der Umgebung wirkende und radial von außen zur Zylinderachse hin gerichtete Vorspannung setzen.

Vorteile gegenüber dem Stand der Technik ergeben sich unter anderem dadurch, dass der in seinem Behälterinnenraum beispielsweise Wärmespeichermittel beherbergende und dadurch als Wärmespeicher für ein adiabatisches Druckluftspeicherkraftwerk ausführbare Druckbehälter aus bautechnisch zugelassenen Mitteln hergestellt werden kann. Bei diesen bautechnisch zugelassenen Mitteln handelt es sich vor allem um lineare Spannglieder, bei denen im Gegensatz zu umlaufenden Spanngliedern keine Umschlingung über den gesamten Umfang hinweg stattfindet. Im Vergleich zu den beim Stand der Technik vorgesehenen umlaufenden Spanngliedern werden bei den linearen Spanngliedern die auftretenden Reibungskräfte minimiert und dadurch der Verschleiß durch Reibungskräfte weitgehend eliminiert. Darüber hinaus wird eine besonders gleichmäßige Krafteinleitung über den Umfang hinweg erreicht, da die einzelnen Spannglieder nur noch für sehnenartige Abschnitte zwischen benachbarten Fortsätzen zuständig sind und nicht mehr, wie beim Stand der Technik üblich, über den gesamten Umfang hinweg.

Weitere Vorteile der Erfindung gegenüber dem Stand der Technik ergeben sich unter anderem dadurch, dass die linearen Spannglieder durch deren Anordnung außerhalb der hohlzylinderförmigen Partie zwischen den auf der äußeren Mantelfläche des Betonmantels aufstehenden Fortsätzen leicht zugänglich sind und bei Bedarf nachgespannt sowie ausgewechselt werden können. Darüber hinaus wird hierdurch eine einfache und zuverlässige Inspektion der Spannglieder durch Inaugenscheinnahme ermöglicht.

Die Fortsätze sind bevorzugt stempelförmig auf dem Betonmantel aufstehend ausgebildet. In einem Querschnitt normal zur Zylinderachse betrachtet können sich die Fortsätze vom Betonmantel aus gesehen zu ihren freien Enden hin verjüngen.

Besonders bevorzugt sind zumindest zwischen denjenigen benachbarten Fortsätzen Druckbogen bzw. Druckgewölbe vorgesehen, zwischen denen lineare Spannglieder gespannt sind. Durch die Druckbogen bzw. -gewölbe treten druckbehälterseitig zwischen den Fortsätzen nur Druckkräfte auf. Im vorzugsweise integral mit den Fortsätzen ausgestalteten Betonmantel treten so an keiner Stelle unbeherrschbare Zugkräfte auf. Die Fortsätze entsprechen hierbei den festen Auflagern einer Bogen- bzw. Gewölbebrücke. Den Abtrag der in Richtung der Sehne des Druckbogens bzw. des Druckgewölbes wirkenden, die Fortsätze auseinander treibenden Schubkräfte besorgen die zwischen den Fortsätzen gespannten linearen Spannelemente.

Ist eine gerade Anzahl von gleichmäßig über den Umfang des Betonmantels verteilt angeordneten, von der Zylinderachse aus gesehen radial nach Außen auf der Mantelfläche aufstehenden Fortsätzen vorgesehen, so können in einer ersten normal zur Zylinderachse verlaufenden Querschnittsebene zwischen ersten Paaren aus benachbarten Fortsätzen lineare Spannglieder gespannt sein, und in einer benachbarten zweiten normal zur Zylinderachse verlaufenden Querschnittsebene können lineare Spannglieder zwischen zweiten Paaren aus benachbarten Fortsätzen gespannt sein.

Bei den ersten Paaren handelt es sich beispielsweise um jeden in Umfangsrichtung geradzahligen Fortsatz und den jeweils im Uhrzeigersinn benachbarten Fortsatz. Bei den zweiten Paaren handelt es sich dann um jeden in Umfangsrichtung ungeradzahligen Fortsatz und den jeweils im Uhrzeigersinn benachbarten Fortsatz. In jeder Querschnittsebene ist dabei jeder Fortsatz mit nur einem der zwei benachbarten Fortsätze mittels eines Spannglieds verbunden. Werden benachbarte Querschnittsebenen betrachtet, so liegen die zwischen jeweils zwei benachbarten Fortsätzen gespannten Spannglieder der einen Querschnittsebene gegenüber denen der benachbarten Querschnittsebene um einen Winkel um die Zylinderachse verdreht. Dieser einen Versatz in Umfangsrichtung bildende Verdrehungswinkel beträgt bei n Fortsätzen pro Querschnittsebene 360°/n.

Mit anderen Worten liegen bei einer Betrachtung benachbarter Querschnittsebenen mit jeweils n Fortsätzen die benachbarten Fortsätze, zwischen denen in der ersten Querschnittsebene die Spannglieder gespannt sind, gegenüber den benachbarten Fortsätzen, zwischen denen in der zweiten Querschnittsebene die Spannglieder gespannt sind, um einen Winkel 360°/n um die Zylinderachse verdreht. Sich hierdurch ergebende Vorteile sind eine einfach herzustellende Geometrie verbunden mit einer einfachen Krafteinleitung von den linearen Spanngliedern in die Fortsätze in den einzelnen, aufeinander folgenden Querschnittsebenen.

Zumindest der Betonmantel der hohlzylinderförmigen Behälterpartie des Druckbehälters kann beispielsweise wenigstens in Umfangsrichtung schlaff bewehrt sein. Hierdurch wird einerseits eine verbesserte Sicherheit des Druckbehälters z.B. gegen Bersten geschaffen und andererseits wird die Herstellung, Montage und Errichtung des Druckbehälters wesentlich vereinfacht. Mittels der auch als Schlaffbewehrung bezeichneten schlaff ausgeführten Bewehrung kann die Sicherheit des Druckbehälters gesteuert werden. Darüber hinaus kann die schlaffe Bewehrung unter Anderem, beispielsweise zusätzlich, dazu vorgesehen sein, die Fortsätze mit dem Betonmantel der hohlzylinderförmigen Behälterpartie zu verbinden, beispielsweise um eine verbesserte und gegebenenfalls höhere Krafteinleitung in die gegebenenfalls vorgesehenen Druckbögen bzw. -gewölbe zu erhalten.

Zumindest die linearen Spannglieder können mittels eines beispielsweise als Wärmeisolierung ausgeführten Wärmeschutzes vor Wärmestrahlung geschützt sein. Hierzu kann im oder außen am Betonmantel eine Wärmedämmschicht vorgesehen sein.

Darüber hinaus kann eine Ummantelung des Druckbehälters beispielsweise als Korrosionsschutz für die linearen Spannglieder vorgesehen sein. Die Ummantelung kann gleichzeitig als Wärme- und/oder Strahlungsschutz vor externer Wärmestrahlung dienen. Die Ummantelung kann als eine um den Druckbehälter herum angeordnete, witterungsbeständige Umhüllung ausgebildet sein, beispielsweise um die außerhalb des Betonmantels der hohlzylinderförmigen Behälterpartie angeordneten, frei liegenden linearen Spannglieder vor Witterungseinflüssen zu schützen.

Der Betonmantel der hohlzylinderartigen Behälterpartie weist vorzugsweise einen normal zur Zylinderachse kreisrunden Innenquerschnitt auf. Der Außenquerschnitt, auf dem die Fortsätze sowie gegebenenfalls die zwischen den Fortsätzen vorgesehenen Druckbögen radial von der Zylinderachse weg aufstehen, kann ebenfalls im Wesentlichen kreisförmig ausgestaltet sein. Insbesondere für den Außenquerschnitt des Betonmantels der hohlzylinderförmigen Behälterpartie kommen jedoch auch andere Geometrien in Frage, beispielsweise regelmäßige Vielecke, an deren Ecken die Fortsätze vorgesehen sind, Polygonzüge, sowie organische Formen und Geometrien, bei denen die Fortsätze bereits ähnlich Auswüchsen stetig differenzierbar, d.h. mit gleichmäßigen, knickfreien und nicht sprunghaften Übergängen, in die äußere Gestalt integriert sein können.

In dem Behälterinnenraum des Druckbehälters kann ein so genanntes Inlay bzw. ein so genannter Inliner in Form eines z.B. gasdichten Innenbehälters angeordnet sein. Der Behälterinnenraum kann hierdurch darüber hinaus thermoskannenartig ausgestaltet sein. Hierzu kann zwischen dem Innenbehälter und der Innenseite der Wandung des Druckbehälters eine Isolationsschicht vorgesehen sein. Durch die Isolationsschicht zwischen dem Innenbehälter und der Innenseite der Wandung des Druckbehälters entsteht eine thermische Isolationswirkung ähnlich einer Thermoskanne. Eine Isolationsschicht im Sinne der Erfindung umfasst sowohl eine oder mehrere Lagen aus geeigneten homogenen oder inhomogenen Substanzen, als auch alternativ oder zusätzlich einen Raum bzw. Zwischenraum, in dem das Vorkommen einer Substanz oder eines Gemischs mehrerer Substanzen beispielsweise durch Evakuation gegebenenfalls bis hin zur vollkommenen Abwesenheit verringert ist.

Darüber hinaus können in dem Betonmantel und/oder an der Innenseite der Wandung des Druckbehälters Kühlmittelkanäle vorgesehen sein, welche zum Schutz des Betonmantels vor einer Überhitzung von einem Wärme abführenden Kühlmittel durchströmt sein können.

Zumindest der Betonmantel des Druckbehälters kann in Richtung parallel zur Zylinderachse vorgespannt sein. Hierzu können ebenfalls lineare Spannglieder vorgesehen sein, welche vom Behälterkopf zum Behälterfuß wahlweise außen entlang der hohlzylinderförmigen Behälterpartie frei verlaufend angeordnet sein können, oder beispielsweise in eigens hierfür vorgesehenen Kanälen, Aussparungen, Rohren oder dergleichen im Betonmantel der hohlzylinderförmigen Behälterpartie des Druckbehälters verdeckt verlaufen können.

Handelt es sich bei der hohlzylinderförmigen Behälterpartie um keinen exakten Hohlzylinder, sondern um einen Körper, dessen Querschnitt sich zu seinen Enden hin verkleinert, so können die Spannglieder vom Behälterkopf zum Behälterfuß auch nicht linear, aber mit sehr großen Krümmungsradien in Hohlräumen des Mantels geführt sein.

Zusätzliche Vorteile der Erfindung gegenüber dem Stand der Technik ergeben sich unter anderem dadurch, dass der Druckbehälter beliebig erweiterbar ist.

Es ist ersichtlich, dass die Erfindung im Wesentlichen durch drei Maßnahmen verwirklicht wird:
Bei der ersten Maßnahme handelt es sich um das Nachaußenführen bzw. im Vergleich zum Stand der Technik Nachaußenverlegen der für die Vorspannung in horizontaler Umfangsrichtung vorgesehenen Spannglieder.

Bei der zweiten Maßnahme handelt es sich um die Verwendung linearer Spannglieder. Durch die Verwendung linearer Spannglieder kommt es im Vergleich zum Stand der Technik zu keiner oder zu einer nur geringen, da nicht vollständigen Umschlingung der hohlzylinderförmigen Behälterpartie. Hierdurch treten keine oder oder zumindest im Vergleich zum Stand der Technik wesentlich geringere Reibungsverluste auf. Darüber hinaus kommt es durch den vollständigen oder teilweisen Verzicht auf Umschlingung bei Relativbewegungen zwischen dem Betonmantel und den Spanngliedern zu keinem oder einem im Vergleich zum Stand der Technik wesentlich verringerten Verschleiß. Relativbewegungen zwischen dem Betonmantel und den Spanngliedern können beispielsweise durch Nachspannen oder durch thermische oder mechanische Wechselbeanspruchungen des Druckbehälters auftreten.

Bei der dritten Maßnahme handelt es sich um die einfache Zugänglichkeit der außen liegenden linearen Spannglieder, wodurch diese einfach zu kontrollieren, einfach auszutauschen und einfach nachzuspannen sind.

Der Druckbehälter kann in dem Behälterinnenraum Wärmespeichermittel beherbergen. Der Druckbehälter kann beispielsweise am Behälterfuß und/oder am Behälterkopf mit wenigstens einer ersten mit einem Verdichter und/oder einer Turbine in Verbindung stehenden oder in Verbindung bringbaren Zu- und/oder Abführungsleitung versehen sein. Darüber hinaus kann der Druckbehälter beispielsweise am Behälterfuß und/oder am Behälterkopf mit wenigstens einer zweiten mit einem Druckluftspeicher in Verbindung stehenden oder in Verbindung bringbaren Zu- und/oder Abführungsleitung versehen sein. Der so zu einem Wärmespeicher ausgestaltete Druckbehälter kann, wie auch ein zu einem anderen Zweck vorgesehener Druckbehälter, stehend oder liegend ganz oder zum Teil im Erdboden versenkt angeordnet sein. Bei einer Anordnung, die zumindest zum Teil im Erdboden versenkt ist, ist eine freie Zugänglichkeit der linearen Spannglieder zu beachten. Diese kann beispielsweise durch eine zuvor erwähnte Ummantelung bzw. Umhüllung sichergestellt sein.

Wichtig ist hervorzuheben, dass der Wärmespeichermittel in seinem Behälterinnenraum beherbergende Druckbehälter beispielsweise zur Verwendung in einem adiabatischen Druckluftspeicherkraftwerk geeignet ist. Der so als Wärmespeicher ausgebildete Druckbehälter ist in der Lage, beispielsweise einen hohen Massenstrom und/oder eine hohe Gesamtmasse eines prozesstechnisch benötigten Fluids durchzusetzen. Bei einem Druckluftspeicherkraftwerk handelt es sich bei dem prozesstechnisch benötigten Fluid beispielsweise um verdichtete bzw. komprimierte Luft. Darüber hinaus ist der Druckbehälter imstande, einen hohen Druck des Fluids von beispielsweise bis mindestens 50 bar zu ertragen. In Verbindung mit im Inneren des Druckbehälters beherbergten Wärmespeichermitteln kann der Druckbehälter bei hohem Massenstrom und/oder hoher Gesamtmasse des unter hohem Druck von z.B. bis mindestens 50 bar stehenden Fluids Wärme bis zu hohen Temperaturen von z.B. bis mindestens 500°C von dem beispielsweise in einen Druckluftspeicher gepumpten Fluid aufnehmen und auch wieder auf das aus dem beispielsweise unterirdischen Druckluftspeicher entnommene Fluid wieder abgeben bzw. rückübertragen. Der Druckbehälter ist in der Lage, die insbesondere bei einem solchen unter einem hohen Innendruck stehenden Wärmespeicher auftretenden Kräfte und Spannungen aufzunehmen.

### Kurzbeschreibung der Zeichnungen

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Es zeigen in schematischer Darstellung:
- Fig. 1: einen Druckbehälter in einer Draufsicht.
- Fig. 2: einen Schnitt entlang der Linie A-A durch den Druckbehälter aus Fig. 1.
- Fig. 3: einen Schnitt entlang der Linie B-B durch den Druckbehälter aus Fig. 2.
- Fig. 4: eine perspektivische Detailansicht des Druckbehälters aus den Fig. 1 bis 3.
- Fig. 5: ein erstes Ausführungsbeispiel eines Außenquerschnitts eines Betonmantels mit kreisrundem Innenquerschnitt normal zur Zylinderachse.
- Fig. 6: ein zweites Ausführungsbeispiel eines Außenquerschnitts eines Betonmantels mit kreisrundem Innenquerschnitt normal zur Zylinderachse.
- Fig. 7: eine Anordnung von Spanngliedern in verschiedenen, aufeinander folgend benachbarten Querschnittsebenen.

### Ausführliche Beschreibung der bevorzugten Ausführungsbeispiele

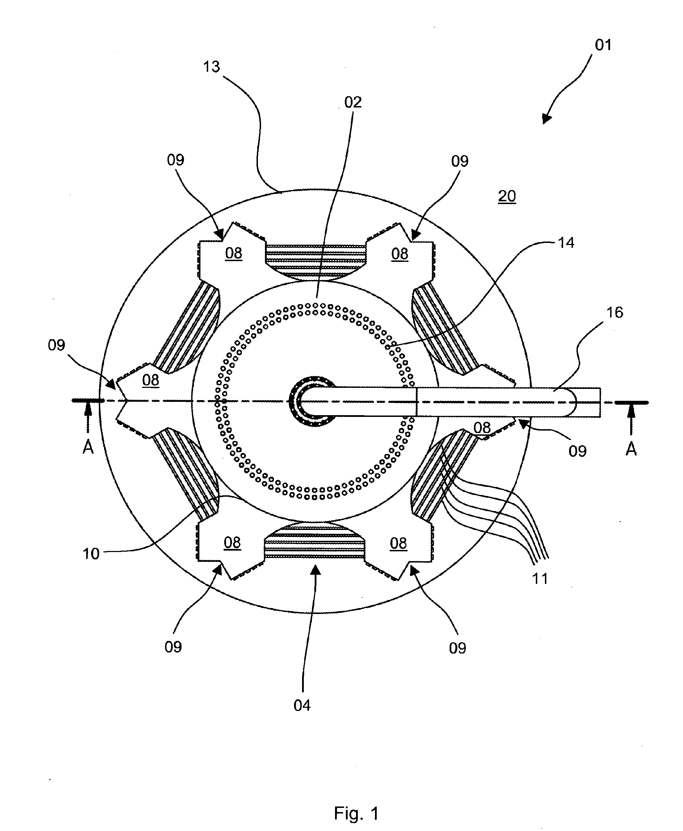

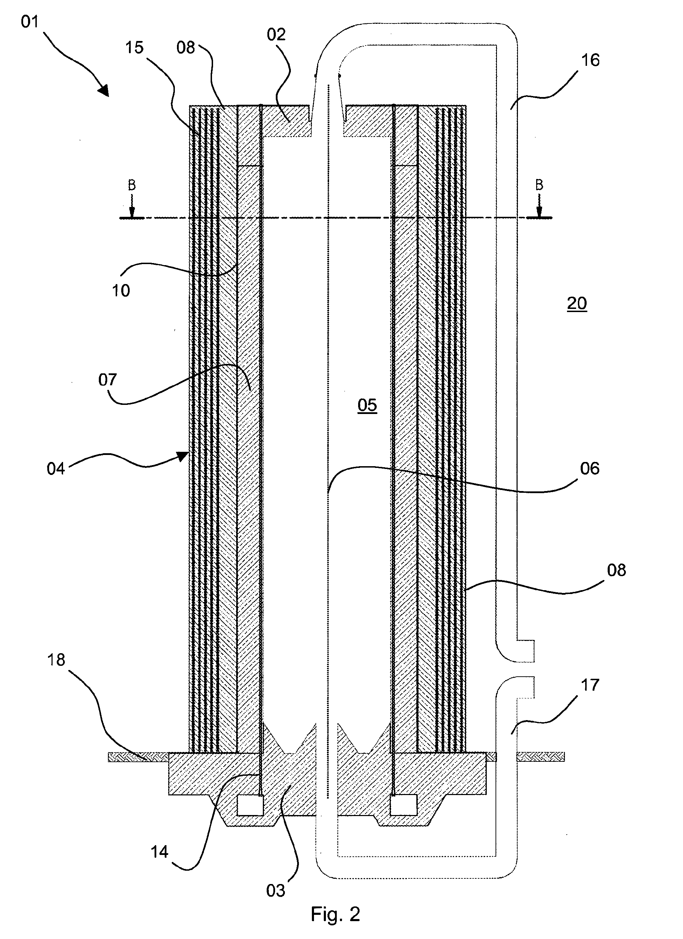

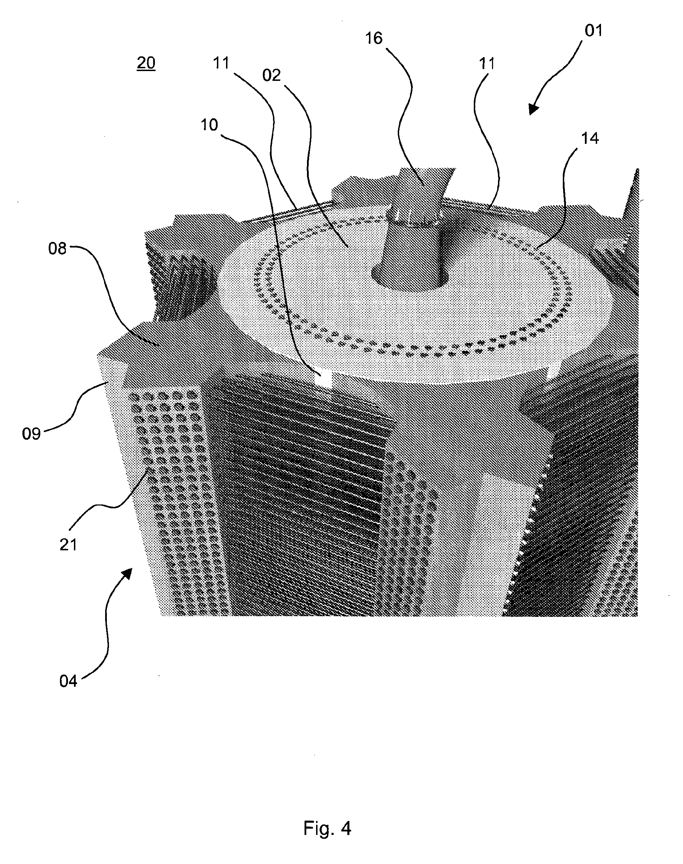

Ein in den Fig. 1 bis 7 ganz oder in Teilen dargestellter Druckbehälter 01 besteht im Wesentlichen aus einer zwischen einem Behälterkopf 02 und einem Behälterfuß 03 angeordneten, hohlzylinderförmigen Behälterpartie 04. Die hohlzylinderförmige Behälterpartie 04 umschließt einen Behälterinnenraum 05, der von dem Behälterkopf 02 und dem Behälterfuß 03 verschlossen ist. Die hohlzylinderförmige Behälterpartie 04 weist eine Zylinderachse 06 auf, welche sich entlang der Achse des Druckbehälters 01 vom Behälterkopf 02 bis zum Behälterfuß 03 erstreckt. Der Behälterkopf 02 kann beispielsweise einen Behälterdeckel und der Behälterfuß 03 einen Behälterboden bilden. Es ist sowohl eine stehende, als auch eine liegende Anordnung des Druckbehälters 01 denkbar. Bei einer stehenden Anordnung dient der Behälterfuß 03 wie in Fig. 2 dargestellt bevorzugt einer Aufstellung des Druckbehälters 01 beispielsweise auf dem Erdboden 18 bzw. einer zumindest zum Teil beispielsweise in den Erdboden 18 eingelassenen Aufstellung des Druckbehälters 01.

Die hohlzylinderförmige Behälterpartie 04 besteht aus einem Betonmantel 07 sowie aus von der Zylinderachse 06 aus gesehen radial nach Außen auf dem Betonmantel 07 aufstehenden Fortsätzen 08.

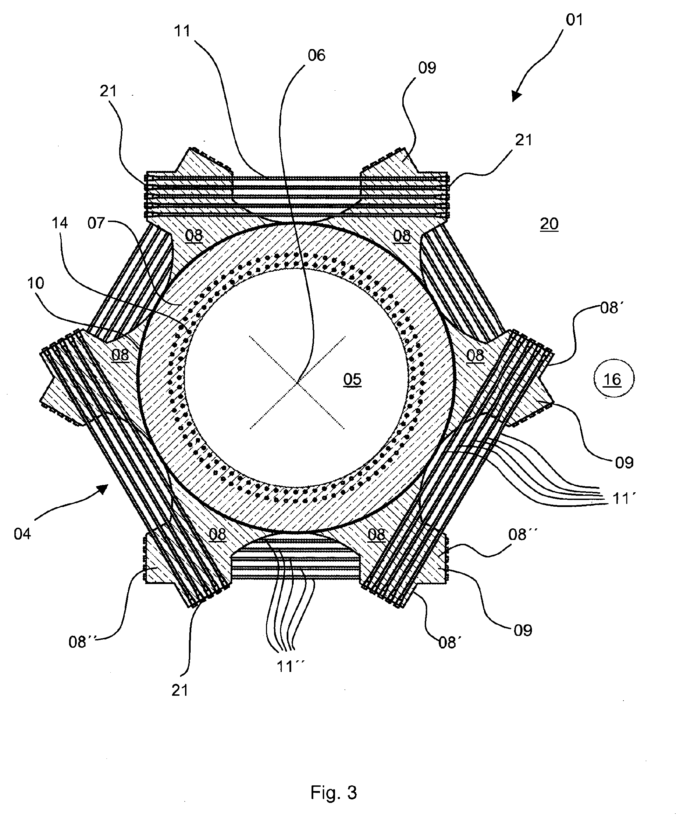

Die auf dem Betonmantel 07 radial von der Zylinderachse 06 weg nach außen aufstehende Fortsätze 08 der hohlzylinderförmigen Behälterpartie 04 sind hierbei in einem in den Fig. 3, 5 und 6 dargestellten, normal zur Zylinderachse verlaufenden Querschnitt und in der in Fig. 1 dargestellten Draufsicht über den Umfang des Betonmantels 07 verteilt angeordnet. In dem in Fig. 3 dargestellten Querschnitt erstrecken sich die Fortsätze 08 ununterbrochen vom Behälterfuß 03 zum Behälterkopf 02.

Die Fortsätze 08 sind zumindest derart weit aufstehend ausgebildet, dass zumindest vom freien Ende 09 jeden Fortsatzes 08 aus zumindest die freien Enden 09 der beiden in Umfangsrichtung unmittelbar benachbarten Fortsätze 08 in gerader Linie über die konvexe Wölbung der Mantelfläche 10 des Betonmantels 07 hinweg sichtbar sind. Hieraus ergibt sich die Notwendigkeit, dass wenigstens drei auf dem Betonmantel 07 radial nach Außen von der Zylinderachse 06 weg aufstehende Fortsätze 08 vorgesehen sind.

Zwischen in Umfangsrichtung benachbarten Fortsätzen 08 sind lineare Spannglieder 11 angeordnet. Die linearen Spannglieder 11 halten die hohlzylinderförmige Behälterpartie unter einer in Umfangsrichtung und gegen einen Überdruck im Behälterinnenraum wirkende radial von außen zur Zylinderachse 06 hin gerichteten Vorspannung.

Vorzugsweise ist eine gerade Anzahl n von gleichmäßig verteilt um den Umfang des Betonmantels 07 angeordneten Fortsätzen 08 vorgesehen. Besonders bevorzugt sind wie in den Fig. 1 bis 5 dargestellt insgesamt sechs gleichmäßig über den Umfang verteilt auf dem Betonmantel 07 von der Zylinderachse 06 weg radial nach außen aufstehende Fortsätze 08 vorgesehen.

Hierdurch können wie in Fig. 3 ersichtlich in einer ersten normal zur Zylinderachse 06 verlaufenden Querschnittsebene lineare Spannglieder 11' zwischen ersten Paaren aus benachbarten Fortsätzen 08' gespannt sein, wohingegen in einer unmittelbar benachbarten, zweiten normal zur Zylinderachse 06 verlaufenden Querschnittsebene lineare Spannglieder 11 " zwischen zweiten Paaren aus benachbarten Fortsätzen 08" gespannt sind. Die ersten Paare benachbarter Fortsätze 08', zwischen denen in der ersten Querschnittsebene die Spannglieder 11' gespannt sind, sind hierbei gegenüber den zweiten Paaren benachbarter Fortsätze 08", zwischen denen in der zweiten Querschnittsebene die Spannglieder 11 " gespannt sind, um einen Winkel 360°/n um die Zylinderachse 06 verdreht, wobei n die Zahl der Fortsätze in einer Querschnittsebene ist.

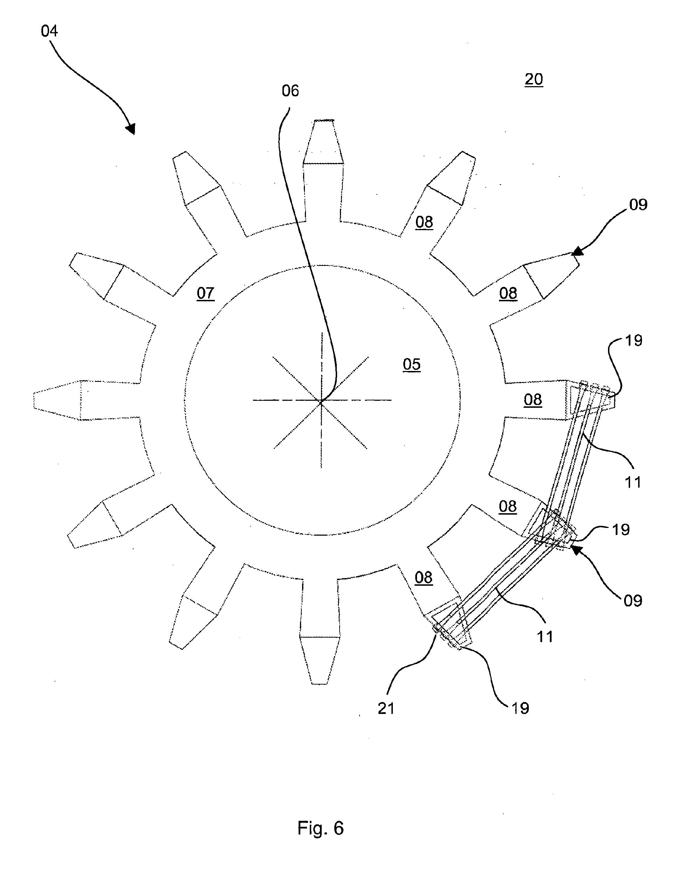

Wichtig ist an dieser Stelle hervorzuheben, dass die Fortsätze 08 und der Betonmantel 07 integrale Bestandteile der hohlzylinderförmigen Behälterpartie 04 sein können, wobei die Fortsätze 08 hierbei vorzugsweise in einem Herstellungsvorgang gemeinsam mit dem Betonmantel 07 und vorzugsweise mit diesem fest verbunden hergestellt werden. Alternativ können die Fortsätze 08 wie in Fig. 6 dargestellt stempelförmig auf dem Betonmantel 07 aufstehend ausgebildet sein. Darüber hinaus können sich die Fortsätze 08 in beiden Ausgestaltungsvarianten in einem Querschnitt normal zur Zylinderachse 06 betrachtet vom Betonmantel 07 aus gesehen zu ihren freien Enden 09 hin verjüngen. Alternativ oder zusätzlich können die Fortsätze 08 in beiden Ausgestaltungsvarianten auswuchsartig mit gleichmäßigen und knickfreien Übergängen in die äußere Gestalt zumindest der hohlzylinderförmigen Behälterpartie 04 integriert sein.

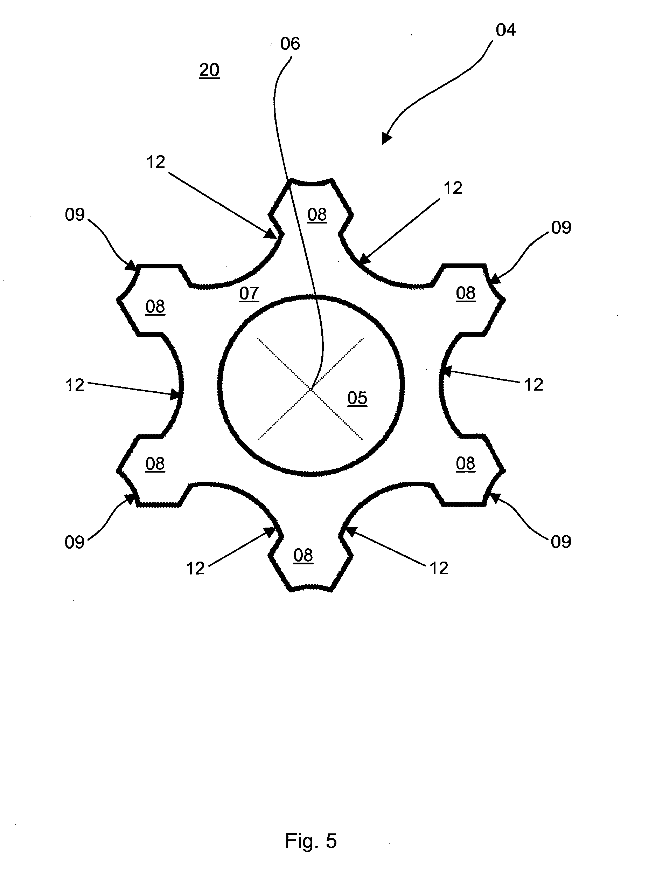

Zwischen den benachbarten Fortsätzen 08 können Druckbogen 12 vorgesehen sein (Fig. 5).

Der Druckbehälter 01 kann wie in Fig. 1 angedeutet durch eine Ummantelung 13 umhüllt sein. Die Ummantelung 13 kann dem Schutz des Druckbehälters 01 gegen Umwelteinflüsse, insbesondere gegen Witterungseinflüsse und Wärmestrahlung dienen. Gleichzeitig kann die Ummantelung 13 den Druckbehälter 01, insbesondere dessen lineare Spannglieder 11 gegen unbefugte und/oder unberechtigte Manipulation schützen.

Zumindest der Betonmantel 07 des Druckbehälters 01 kann wie in Fig. 2 dargestellt mittels linearer Spannglieder 14 in Richtung parallel zur Zylinderachse 06 vorgespannt sein. Die linearen Spannglieder 14 können hierbei vom Behälterkopf 02 zum Behälterfuß 03 in eigens hierfür vorgesehenen Kanälen, Aussparungen, Rohren oder dergleichen im Betonmantel 07 der hohlzylinderförmigen Behälterpartie 04 des Druckbehälters 01 verdeckt verlaufen.

Alternativ oder zusätzlich kann der Betonmantel 07 wie in Fig. 2 dargestellt mittels einer zumindest in Richtung parallel zur Zylinderachse 06 verlaufenden Bewehrung 15 schlaff bewehrt sein. Hierzu können auch als Schlaffbewehrung bezeichnete schlaff ausgeführte Bewehrungen 15 vorgesehen sein, mit denen die Sicherheit des Druckbehälters gesteuert werden kann. Die Bewehrungen 15 können einer Bewehrung beispielsweise wenigstens in Umfangsrichtung dienen.

Der Betonmantel 07 der hohlzylinderförmigen Behälterpartie 04 des Druckbehälters 01 kann wie in den Fig. 3, 5 und 6 dargestellt einen normal zur Zylinderachse 06 kreisrunden Innenquerschnitt aufweisen.

Der Druckbehälter 01 kann wie in Fig. 2 dargestellt beispielsweise am Behälterkopf 02 mit einer ersten Zu- und/oder Abführungsleitung 16 versehen sein. Beispielsweise am Behälterfuß 03 kann der Druckbehälter 01 beispielsweise mit wenigstens einer zweiten Zu- und/oder Abführungsleitung 17 versehen sein.

Der Druckbehälter 01 kann in dem Behälterinnenraum 05 Wärmespeichermittel beherbergen. Die erste Zu- und/oder Abführungsleitung 16 steht in diesem Fall bevorzugt wahlweise mit einem Verdichter oder einer Turbine in Verbindung bzw. ist wahlweise mit einem Verdichter oder einer Turbine in Verbindung bringbar. Die zweite Zu- und/oder Abführungsleitung 17 steht hierbei bevorzugt mit einem beispielsweise unterhalb des Erdbodens 18 angeordneten Druckluftspeicher in Verbindung bzw. ist wahlweise mit einem Druckluftspeicher in Verbindung bringbar.

Der durch eine Beherbergung von Wärmespeichermitteln im Behälterinnenraum 05 zu einem Wärmespeicher ausgestaltete Druckbehälter 01 kann beispielsweise zur Verwendung in einem adiabatischen Druckluftspeicherkraftwerk vorgesehen sein.

Ein solcher als Wärmespeicher ausgestalteter Druckbehälter 01 wird nachfolgend beschrieben. Dabei erwähnte Merkmale, sofern sie nicht ausschließlich zur Ausgestaltung eines Druckbehälters 01 als Wärmespeicher vorgesehen sind, können auch bei einem für einen anderen Zweck vorgesehenen Druckbehälter Anwendung finden.

Ein als Wärmespeicher ausgestalteter Druckbehälter 01 kann als ein druckfester Behälter ausgeführt sein, dessen im Wesentlichen durch
- den Behälterkopf 02,
- den Behälterfuß 03 und
- die zwischen Behälterkopf 02 und Behälterfuß 03 angeordnete hohlzylinderförmige Behälterpartie 04 mit
- dem Betonmantel 07 und
- den darauf aufstehenden Fortsätzen 08
gebildete Hülle Drücken im Bereich von beispielsweise mindestens 50 bar sicher standhält.

Wichtig ist auch hierbei hervorzuheben, dass das Entscheidende der Erfindung die besondere Art des Einleitens der Vorspannung mittels linearer Spannglieder 11 über Fortsätze 08 in den Betonmantel 07 ist.

Ebenso wichtig ist die Trennung der Vorspannung von der für eine zusätzliche Sicherheit eventuell eingebauten schlaffen Bewehrung hervorzuheben. Die schlaffe Bewehrung kann ohne Störung und Berücksichtigung der Vorspannung im inneren Betonmantel verlegt werden, und die Vorspannung kann außen angebracht werden. Das vereinfacht die Planung und den Bau erheblich und verbessert das Tragverhalten durch weniger Fehlstellen und Hohlräume im Betonmantel 07.

Der als Wärmespeicher ausgestaltete Druckbehälter 01 weist mindestens eine erste Zu- und/oder Abführungsleitung 16 für die heiße komprimierte Luft und mindestens eine zweite Zu- und/oder Abführungsleitung 17 der abgekühlten Luft aus dem Druckbehälter 01 in den beispielsweise unterirdischen Druckspeicher auf. Außerdem weist der Druckbehälter 01 mindestens eine Zuleitung aus dem beispielsweise unterirdischen Druckspeicher in den Wärmespeicher auf, die auch mit der zweiten Zu- und/oder Abführungsleitung 17 aus dem Wärmespeicher in den Druckspeicher identisch sein kann, sowie eine Ableitung für die im Wärmespeicher wiedererhitzte Luft zur Turbine, welche wiederum mit der ersten Zu- und/oder Abführungsleitung 16 identisch sein kann.

Bevorzugt enthält der als Wärmespeicher ausgestaltete Druckbehälter 01 einen gasdichten Inliner bzw. ein gasdichtes Inlay, welcher bzw. welches beispielsweise aus Metall hergestellt sein kann.

Wenigstens die druckaufnehmende hohlzylinderförmige Behälterpartie 04 des Druckbehälters 01 besteht bevorzugt aus einem beispielsweise schlaff bewehrten zylindrischen oder polygonalen mit vorzugsweise mindestens sechs Ecken ausgeführten Betonmantel 07, der über ein Ensemble externer, bevorzugt freilaufender, linearer Spannglieder 11 vermittels z.B. als stempelartige Auswüchse ausgeführter Fortsätze 08, über die die Vorspannkraft in den Betonmantel 07 übertragen wird, unter zyklische umlaufende Vorspannung gesetzt wird. Die linearen Spannglieder 11 können hierzu in einem an den freien Enden 09 der Fortsätze 08 angeordneten Aufnahmesystem 19 verlaufen, das eine Metallkonstruktion, aber auch ein Betonteil sein kann.

Eine vertikale Vorspannung des als Wärmespeicher ausgestalteten Druckbehälters 01 kann durch im Betonmantel 07 oder außerhalb des Betonmantels 07 parallel zur Zylinderachse 06 verlaufende lineare Spannglieder 14 erfolgen.

Der beispielsweise im oberen Bereich eines stehend angeordneten Druckbehälter 01 vorgesehenen Behälterkopf 02 kann als eine Beton- oder Stahlkappe oder - kuppel ausgestaltet sein. Ebenso ist denkbar, dass eine Stahlkappe oder -kuppel in eine den Behälterkopf 02 bildenden Betonkappe oder -kuppel integriert ist.

Der Behälterkopf 02 kann insbesondere bei einer Ausgestaltung des Druckbehälters 01 als ein Wärmespeicher bevorzugt abnehmbar sein, wodurch der Behälterinnenraum 05 für Montage, Beschickung und Wartung leicht zugänglich ist. Vorzugsweise befindet sich bei einem aufrecht stehenden Druckbehälters 01 mindestens der Behälterkopf 02 oberhalb des Erdbodens 18, der Rest kann im Erdboden 18 versenkt sein.

Zumindest der Behälterkopf 02 und die hohlzylinderförmige Behälterpartie 04 des Druckspeichers 01 können gegen die Umgebung 20 durch wärmedämmendes Material thermisch isoliert sein. Die thermische Isolation kann zumindest zum Teil durch die gegebenenfalls vorgesehene Ummantelung 13 erfolgen.

Eine durch eine hitzebeständige Schicht geschützte erste thermisch isolierende Schicht trennt die bei einer Ausgestaltung des Druckbehälters 01 als Wärmespeicher im Behälterinnenraum 05 angeordneten Wärmespeichermittel vom hitzeempfindlicheren Betonmantel 07. Zwischen der ersten thermisch isolierenden Schicht und Betonmantel 07 sowie gegebenenfalls dem Behälterkopf 02 und dem Behälterfuß 03 kann sich darüber hinaus noch eine zweite thermisch isolierende Schicht befinden, falls die erste thermisch isolierende Schicht nicht selbst in ausreichendem Maße thermisch isolierend wirkt. Die zweite thermisch isolierende Schicht kann beispielsweise aus Luft bestehen.

Aufgrund der Wärmeausdehnung der Wärmespeichermittel ist vorgesehen, dass diese keinen direkten Kontakt zur hitzebeständigen Schicht aufweisen. Alternativ oder zusätzlich können Leerräume zwischen den einzelnen Elementen vorhanden sein, die ausdehnungskompensierend wirken.

Die Wärmespeichermittel können auf einer auf Stützen ruhenden Decke liegen, welche bevorzugt aus Beton hergestellt sein kann. Im Inneren des Betonmantels 07 kann ein Kühlkreislauf zur Kühlung der Innenseite der Wandung des Druckbehälters 01 zumindest im Bereich des Betonmantels 07 der hohlzylinderförmigen Behälterpartie 04 verlaufen.

Der Behälterfuß 03 kann in Form eines am Erdboden 18 oder zumindest zum Teil darin versenkt angeordneten Fundaments ausgestaltet sein, in den die darauf aufstehende und mittels des Behälterkopfs 02 an ihrer dem Erdboden 18 abgewandten Seite verschlossene hohlzylinderförmige Behälterpartie 04 eingegossen sein kann.

Die Gesamthöhe eines als Wärmespeicher ausgestalteten Druckbehälters 01 kann beispielsweise 50 m bei einem Innendurchmesser von beispielsweise 12 m betragen. Auch können wesentlich größere Abmessungen verwirklicht werden, ebenso wie kleinere Abmessungen.

Der schlaff bewehrte Betonmantel 07 kann beispielsweise 2 m stark sein. Auch können wesentlich größere Stärken verwirklicht werden, ebenso wie kleinere Stärken. Der Betonmantel 07 kann aus gewöhnlichem Beton bestehen, da dies kostengünstiger ist, als hochfester Beton.

Auf der dem Behälterinnenraum 05 und der Zylinderachse 06 abgewandten Außenseite des Betonmantels 07 können in regelmäßigem Abstand Fortsätze 08 in Form von Auswüchsen vorgesehen sein. Bei dem in Fig. 6 dargestellten Ausführungsbeispiel eines Außenquerschnitts eines Betonmantels 07 mit kreisrundem Innenquerschnitt normal zur Zylinderachse 06 handelt es sich beispielsweise um zwölf gleichmäßig über den Umfang des Betonmantels 07 verteilt angeordnete, außen auf dem Betonmantel 07 aufstehende Fortsätze 08. Die Fortsätze 08 sind bevorzugt ebenfalls aus Beton hergestellt.

Die freien Enden 09 der Fortsätze 08 können Aufnahmesysteme 19 für die linearen Spannglieder 11 tragen. Die Aufnahmesysteme 19 können als Metallkonstruktionen beispielsweise aus Stahl ausgeführt sein.

Die linearen Spannglieder 11 erstrecken sich vom einen am freien Ende 09 eines ersten Fortsatzes 08 angeordneten Aufnahmesystem 19 zum nächsten, am freien Ende 09 eines zweiten Fortsatzes 08 angeordneten Aufnahmesystem 19. Die linearen Spannglieder können hierbei in so genannten Speichen verankert sein.

In Fig. 6 ist hierbei nur ein Teil der linearen Spannglieder 11 an einem Teil der Aufnahmesysteme 19 dargestellt. Indem alle Aufnahmesysteme 19 reihum mit linearen Spanngliedern 11 bestückt sind und diese reihum vorzugsweise gleichermaßen gespannt sind, wirken die Fortsätze 08 auf dem Betonmantel 07 wie Stempel, die einen stabilisierenden Druck auf den Betonmantel 07 ausüben und die Gefahr der Rissbildung bei Beaufschlagung des Behälterinnenraums 05 des Druckbehälters 01 mit einem Überdruck gegenüber der den Druckbehälter 01 umgebenden Umgebung 20 verhindern oder stark herabsetzen.

Es zeigt sich, dass schon mit relativ wenigen gleichmäßig verteilt auf dem Umfang des Betonmantels 07 aufstehenden Fortsätzen 08 in Verbindung mit zwischen benachbarten Fortsätzen 08 in gerader Richtung außen am Betonmantel 07 gespannter linearer Spannglieder 11 die Wirkung von innerhalb des Betonmantels 07 angeordneten, umlaufenden Spanngliedern, wie sie in der EP 1857614 A2 beschrieben sind, wenigstens gleichwertig ersetzen lässt.

Darüber hinaus ergeben sich wesentliche Vorteile. Beispielsweise sind einige der Vorteile der externen, außerhalb des Betonmantels 07 angeordneten linearen Spannglieder 11 deren Linearität, deren definiert einstellbare Spannung, deren leichte Zugänglichkeit, deren langfristig bekanntes Tragverhalten und deren geringe Temperaturbelastung. Für das Anspannen der linearen Spannglieder 11 ist es dabei vorteilhaft, wenn die Köpfe 21 der linearen Spannglieder 11 leicht zugänglich sind und die Spannmaschine ausreichend Platz hat. Dies ist einerseits möglich, indem die Auswüchse samt ihrer Aufnahmesysteme weit genug nach außen vom Betonmantel abstehen, wie in der Figur dargestellt.

Es ist denkbar, dass die Fortsätze 08 die Aufnahmesysteme 19 bilden, diese umfassen, oder von diesen umfasst oder gebildet werden.

Darüber hinaus ist auch denkbar, dass die zwischen zwei äußeren Fortsätzen 08 gespannten linearen Spannglieder 11 wie in Fig. 3 dargestellt einen dazwischen liegenden Fortsatz 08 überspringen, wobei der dazwischen liegende Fortsatz 08 über einen äußeren Fortsatz 08 hinweg mit einem linearen Spannglied 11 mit einem weiteren Fortsatz 08 verbunden ist.

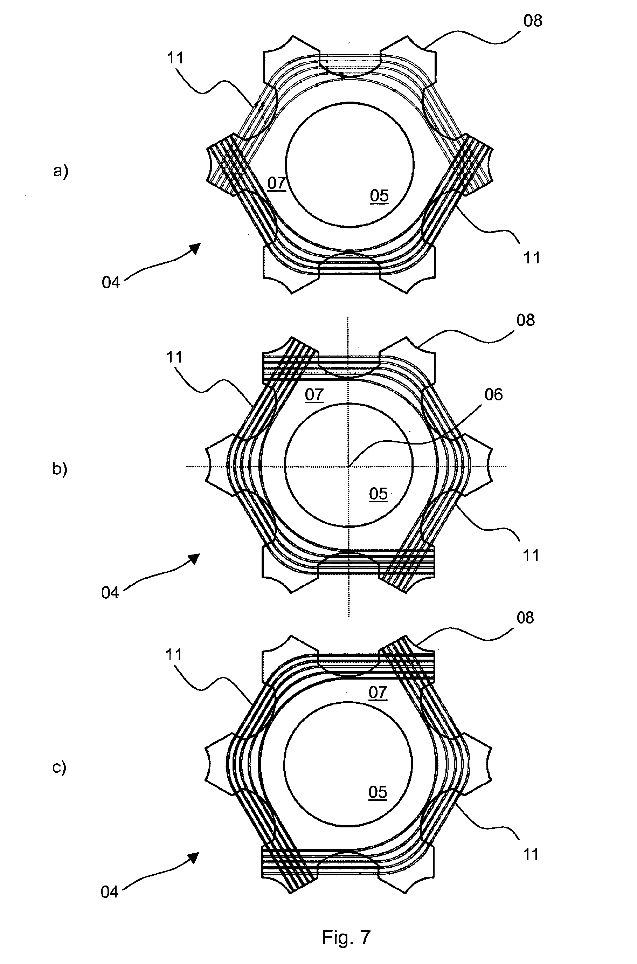

Zusätzlich ist denkbar, dass die zwischen zwei äußeren Fortsätzen 08 gespannten linearen Spannglieder 11 wie in Fig. 7a) dargestellt mehrere dazwischen liegende Fortsätze 08 überspringen, wobei die dazwischen liegenden Fortsätze 08 in in den Fig. 7b) und 7c) dargestellten benachbarten Querschnittsebenen jeweils über einen äußeren Fortsatz 08 hinweg mit über die dazwischen liegenden Fortsätze 08 umgelenkten linearen Spanngliedern 11 mit einem weiteren Fortsatz 08 verbunden sind. Die Fortsätze 08, an denen hierbei eine Umlenkung der Spannglieder 11 erfolgt, sind hierbei von durch benachbarte Querschnittsebenen gebildeter Spanngliedlage zu Spanngliedlage um die Zylinderachse 06 verdreht angeordnet. Sich hierdurch ergebende Vorteile sind eine Verringerung der Spannstellen und Anker für die Spannglieder 11. Darüber hinaus weist die Ausgestaltung mit Umlenkung im Vergleich zum Stand der Technik eine geringere Umschlingung auf, wodurch Reibungsverluste ebenfalls verringert werden.

Darüber hinaus ist möglich, die Fortsätze 08 in benachbarten, normal zur Zylinderachse 06 verlaufenden Querschnittsebenen versetzt anzuordnen und dann auch kürzer und materialsparender auszugestalten.

Mit Blick auf Fig. 6 könnte hierbei jeder zweite Fortsatz 08 eine Querschnittsebene tiefer angeordnet sein, und die linearen Spannglieder 11 verliefen bevorzugt vom Fortsatz 08 auf zwölf Uhr zum Fortsatz 08 auf zwei Uhr, von dort zum Fortsatz 08 auf vier Uhr usw. und schließlich vom Fortsatz 08 auf zehn Uhr zum Ausgangspunkt zurück. Eine Querschnittsebene tiefer können die linearen Spannglieder 11 vom Fortsatz 08 auf ein Uhr zum Fortsatz 08 auf drei Uhr usw. und ringsum schließlich vom Fortsatz 08 auf elf Uhr zum Fortsatz 08 auf ein Uhr zurück.

Wenn die Aufnahmesysteme 19 an den freien Enden 09 der Fortsätze 08 als Pendelstützen ausgeführt werden oder als Stützen, die ohne großen Kraftaufwand seitliche in Richtung der linearen Spannglieder 11 Bewegungen z.B. durch elastische Verformung ausführen können, ist es möglich, durch Nachstellen der Vorspannung an einem einzigen linearen Spannglied 11 in einer Querschnittsebene die Vorspannung ohne großen Verlust hinreichend gleichmäßig über den gesamten Umfang zu verteilen und damit den Betonmantel 07 gleichmäßig vorzuspannen. Eine solche Anordnung ist besonders wartungsfreundlich und Ausfallsicher gegen ein Versagens eines linearen Spanngliedes 11, weil dann keine extremen ungleichen Vorspannungen am Betonmantel 07 auftreten.

Die Ummantelung 13 kann als luftdurchlässige Hülle ausgestaltet sein, damit es zu keinem Wärmestau unter ihr kommt.

Die Erfindung weist neben den bereits genannten weitere Vorteile gegenüber dem Stand der Technik auf, wie z.B.:
- Da die linearen Spannglieder 11 außerhalb des Betonmantels 07 verlaufen und linear sind, wird das Problem nicht zugelassener, umlaufender Spannglieder vermieden, und es sind konventionelle Spannglieder mit Bauzulassung einsetzbar.
- Der Behälterinnenraum 05 des beispielsweise als Wärmespeicher ausgeführten Druckbehälters 01 wird durch einen Überdruck gegenüber der Umgebung 20 beaufschlagt. Bei einer nicht vorgespannten Ausführung ist daher insbesondere die Wandung des Betonmantels 07 der hohlzylinderförmigen Behälterpartie 04 in Umfangsrichtung hohen Zugspannungen ausgesetzt, die auch bei einer bewehrten Stahlbetonausführung des Betonmantels 07 zu einer Rissbildung führen. Wird der Betonmantel 07 vorgespannt, kann auch unter Beanspruchung durch einen Überdruck im Behälterinnenraum 05 der Rissbildung entgegengewirkt werden, wodurch gegebenenfalls auf einen gasdichten Inliner verzichtet werden kann.

Wie einleitend angeführt ist es bekannt, mit umlaufenden Spanngliedern, die in einem Querschnitt normal zur Zylinderachse 06 im Betonmantel 07 versenkt angeordnet der konvexen Wölbung der Mantelfläche 10 des Betonmantels 07 folgen, den Betonmantel 07 vorzuspannen. Nachteilig hieran ist, dass es infolge der Wölbung der Mantelfläche zu Beschränkungen bei der Wahl der Spanngliedgröße infolge eines Mindestkrümmungsradius kommt. Zusätzlich kommt es durch die mit der Krümmung einhergehenden Umschlingung zu erheblichen Vorspannverlusten und Ungleichmäßigkeiten in der Vorspannung. Demgegenüber ist bei der Erfindung vorgesehen:
- den Betonmantel 07 mit außerhalb des Betonmantels 07 angeordneten linearen Spanngliedern 11 vorzuspannen. Dadurch werden Vorspannverluste infolge von Reibungsverlusten, infolge von Umlenkung und infolge einer Umschlingung vermieden. Außerdem können hierdurch insbesondere bei kleinen Innendurchmessern Spannglieder mit einer höheren Litzenanzahl verwendet werden als beim Stand der Technik mit im Betonmantel geführten Spanngliedern, da der Mindestumlenkradius nicht mehr maßgebend die Spanngliedgröße bei kleinen Innendurchmessern begrenzt. Dies ist umso wichtiger, je geringer der Behälterradius ist. Bei einer teilweisen Umlenkung an einem Teil der Fortsätze 08 kann durch die kurze Länge teilweise auch ein kleinerer Umlenkradius verwendet werden, als er bei einer Anordnung der Spannglieder im Inneren des Betonmantels 07 möglich wäre. Zusätzlich können an diesen lokalen Stellen speziell optimierte Umlenksattel verwendet werden, die für eine saubere Umlenkung sorgen.
- Querschnittsschwächungen des Zylinders durch den Verzicht auf beim Stand der Technik vorgesehene, im Betonmantel verlaufende, umlaufende Spannglieder zu vermeiden.
- Die Einbaulagen von zur Schlaffbewehrung vorgesehenem Schlaffstahl und der für die Vorspannung vorgesehenen, beispielsweise aus Spannstahl bestehenden Spannglieder zu trennen und für eine einfache Einbaubarkeit des Schlaffstahls zu sorgen.
- die Länge der Spannglieder im Vergleich zum Stand der Technik durch die weiter außen liegende Lage linearer Spannglieder 11 zu vergrößern. Dadurch werden Vorspannverluste infolge Keilschlupf verringert.

Durch die linearen Spannglieder 11 ist der Mindestumlenkradius der Spannglieder nicht mehr maßgebend. Es können große Spannglieder eingesetzt werden, welche im Vergleich zum Stand der Technik eine wesentlich größere zur Vorspannung des Betonmantels 07 dienliche Last ertragen.
Durch die externe Anordnung der linearen Spannglieder 11 können diese inspiziert und bei Bedarf ausgetauscht werden.

Die Erfindung ist insbesondere im Bereich der Herstellung von Druckbehältern beispielsweise für Anlagen zur Energieerzeugung und/oder zur Energiespeicherung gewerblich anwendbar.

### Bezugszeichenliste

- 01: Druckbehälter
- 02: Behälterkopf
- 03: Behälterfuβ
- 04: hohlzylinderförmige Behälterpartie
- 05: Behälterinnenraum
- 06: Zylinderachse
- 07: Betonmantel
- 08; 08'; 08": Fortsatz
- 09: freies Ende
- 10: Mantelfläche
- 11; 11'; 11": lineares Spannglied
- 12: Druckbogen
- 13: Ummantelung
- 14: lineares Spannglied
- 15: Bewehrung
- 16: erste Zu- und/oder Abführungsleitung
- 17: zweite Zu- und/oder Abführungsleitung
- 18: Erdboden
- 19: Aufnahmesystem
- 20: Umgebung
- 21: Kopf

## Patentansprüche

1. Druckbehälter (01) mit einer zwischen einem Behälterkopf (02) und einem Behälterfuß (03) angeordneten, hohlzylinderförmigen Behälterpartie (04) aus einem Betonmantel (07), deren Zylinderachse (06) sich vom Behälterkopf (02) entlang der Achse des Druckbehälters (01) bis zum Behälterfuß (03) erstreckt, wobei die hohlzylinderförmige Behälterpartie (04) einen Behälterinnenraum (05) umschließt, der von dem Behälterkopf (02) und dem Behälterfuß (03) verschlossen ist,
**dadurch gekennzeichnet,**
**dass** die hohlzylinderförmige Behälterpartie (04) in einem normal zur Zylinderachse (06) verlaufenden Querschnitt mindestens drei gleichmäßig über den Umfang des Betonmantels (07) verteilt angeordnete, radial von der Zylinderachse (06) weg nach außen aufstehende Fortsätze (08) aufweist, welche zumindest derart weit aufstehend ausgebildet sind, dass zumindest vom freien Ende (09) jeden Fortsatzes (08) aus zumindest die freien Enden (09) der beiden in Umfangsrichtung unmittelbar benachbarten Fortsätze (08) in gerader Linie über die Mantelfläche (10) des Betonmantels (07) hinweg sichtbar sind, wobei zwischen in Umfangsrichtung benachbarten Fortsätzen (08) lineare Spannglieder (11) angeordnet sind, welche die hohlzylinderförmige Behälterpartie (04) unter eine in Umfangsrichtung und gegen einen Überdruck im Behälterinnenraum (05) wirkende radial von außen zur Zylinderachse (06) hin gerichtete Vorspannung setzen,
und **dass** er eine Anzahl n von Fortsätzen (08) in einem Querschnitt normal zur Zylinderachse (06) aufweist,
und **dass** in einer ersten normal zur Zylinderachse (06) verlaufenden Querschnittsebene lineare Spannglieder (11') zwischen ersten Paaren aus benachbarten Fortsätzen (08') gespannt sind, und in einer benachbarten, zweiten normal zur Zylinderachse (06) verlaufenden Querschnittsebene lineare Spannglieder (11") zwischen zweiten Paaren aus benachbarten Fortsätzen (08") gespannt sind, wobei die ersten Paare benachbarter Fortsätze (08'), zwischen denen in der ersten Querschnittsebene die Spannglieder (11') gespannt sind, gegenüber den zweiten Paaren benachbarter Fortsätzen (08"), zwischen denen in der zweiten Querschnittsebene die Spannglieder (11 ") gespannt sind, um einen Winkel von 360°/n um die Zylinderachse (06) verdreht sind..

2. Druckbehälter nach Anspruch 1,
**dadurch gekennzeichnet,**
**dass** zwischen den benachbarten Fortsätzen (08) Druckbogen (12) vorgesehen sind.

3. Druckbehälter nach einem der vorhergehenden Ansprüche,
**dadurch gekennzeichnet,**
**dass** der Betonmantel (07) schlaff bewehrt (15) ist.

4. Druckbehälter nach einem der vorhergehenden Ansprüche,
**gekennzeichnet durch**
eine integrale Ausgestaltung von Betonmantel (07) und Fortsätzen (08) der hohlzylinderförmigen Behälterpartie (04).

5. Druckbehälter nach einem der vorhergehenden Ansprüche,
**gekennzeichnet durch**
einen Wärmeschutz der linearen Spannglieder (11).

6. Druckbehälter nach einem der vorhergehenden Ansprüche,
**gekennzeichnet durch**
eine Ummantelung (13) des Druckbehälters (01).

7. Druckbehälter nach einem der vorhergehenden Ansprüche,
**dadurch gekennzeichnet,**
**dass** die Fortsätze (08) stempelförmig auf dem Betonmantel (07) aufstehend ausgebildet sind.

8. Druckbehälter nach einem der vorhergehenden Ansprüche,
**dadurch gekennzeichnet,**
**dass** sich die Fortsätze (08) in einem Querschnitt normal zur Zylinderachse (06) betrachtet vom Betonmantel (07) aus gesehen zu ihren freien Enden (09) hin verjüngen.

9. Druckbehälter nach einem der vorhergehenden Ansprüche,
**dadurch gekennzeichnet,**
**dass** der Betonmantel (07) einen normal zur Zylinderachse (06) kreisrunden Innenquerschnitt aufweist.

10. Druckbehälter nach einem der vorhergehenden Ansprüche,
**gekennzeichnet durch**
in dem Behälterinnenraum (05) beherbergte Wärmespeichermittel.

11. Druckbehälter nach einem der vorhergehenden Ansprüche,
**dadurch gekennzeichnet,**
**dass** der Betonmantel (07) normal zur Zylinderachse (06) einen Außenquerschnitt in Form eines regelmäßigen Vielecks aufweist, auf dessen Ecken die Fortsätze (08) von der Zylinderachse (06) radial nach außen aufstehend angeordnet sind.

12. Druckbehälter nach einem der vorhergehenden Ansprüche,
**dadurch gekennzeichnet,**
**dass** die Fortsätze (08) auswuchsartig mit gleichmäßigen und knickfreien Übergängen in die äußere Gestalt zumindest der hohlzylinderförmigen Behälterpartie (04) integriert sind.

13. Druckbehälter nach einem der vorhergehenden Ansprüche,
**dadurch gekennzeichnet,**
**dass** zumindest der Betonmantel (07) des Druckbehälters (07) in Richtung parallel zur Zylinderachse (06) vorgespannt (14) ist.

## Claims

1. Pressure vessel (01) comprising a hollow-cylinder-shaped vessel part (04) which is made of a concrete jacket (07) and which is arranged between a vessel head (02) and a vessel base (03) and whose cylinder axis (06) extends from the vessel head (02) to the vessel base (03) along the axis of the pressure vessel (01), wherein the hollow-cylinder-shaped vessel part (04) encloses a vessel interior (05) which is closed by the vessel head (02) and the vessel base (03), **characterized in that**, in a cross section running normal to the cylinder axis (06) the hollow-cylinder-shaped vessel part (04) has at least three extensions (08) which are distributed uniformly over the circumference of the concrete jacket (07) and which rise radially outwardly away from the cylinder axis (06), which extensions are designed to rise at least so far that, at least from the free end (09) of each extension (08), at least the free ends (09) of the two extensions (08) immediately adjacent in the circumferential direction are visible in a straight line beyond the outer surface (10) of the concrete jacket (07), wherein linear tensioning elements (11) are arranged between extensions (08) adjacent in the circumferential direction and place the hollow-cylinder-shaped vessel part (04) under a pretension which acts in the circumferential direction and against an overpressure in the vessel interior (05) and is directed radially from the outside towards the cylinder axis (06), and **in that** it has a number n of extensions (08) in a cross section normal to the cylinder axis (06), and **in that**, in a first cross-section plane running normal to the cylinder axis (06), linear tensioning elements (11') are tensioned between first pairs of adjacent extensions (08'), and, in an adjacent, second cross section plane running normal to the cylinder axis (06), linear tensioning elements (11") are tensioned between second pairs of adjacent extensions (08"), wherein the first pairs of adjacent extensions (08') between which the tensioning elements (11') are tensioned in the first cross section plane are rotated, with respect to the second pairs of adjacent extensions (08") between which the tensioning elements (11") are tensioned in the second cross section plane, by an angle of 360°/n about the cylinder axis (06).

2. Pressure vessel according to Claim 1, **characterized in that** pressure arcs (12) are provided between the adjacent extensions (08).

3. Pressure vessel according to one of the preceding claims, **characterized in that** the concrete jacket (07) is loosely reinforced (15).

4. Pressure vessel according to one of the preceding claims, **characterized by** an integral design of concrete jacket (07) and extensions (08) of the hollow-cylinder-shaped vessel part (04).

5. Pressure vessel according to one of the preceding claims, **characterized by** a thermal protection of the linear tensioning elements (11).

6. Pressure vessel according to one of the preceding claims, **characterized by** an enclosure (13) of the pressure vessel (01).

7. Pressure vessel according to one of the preceding claims, **characterized in that** the extensions (08) are designed to rise in a prop-like manner on the concrete jacket (07).

8. Pressure vessel according to one of the preceding claims, **characterized in that**, in a cross section normal to the cylinder axis (06), as viewed from the concrete jacket (07), the extensions (08) taper towards their free ends (09).

9. Pressure vessel according to one of the preceding claims, **characterized in that** the concrete jacket (07) has an inner cross section which is circular normal to the cylinder axis (06).

10. Pressure vessel according to one of the preceding claims, **characterized by** heat-storage means accommodated in the vessel interior (05).

11. Pressure vessel according to one of the preceding claims, **characterized in that**, normal to the cylinder axis (06), the concrete jacket (07) has an outer cross section in the form of a regular polygon on whose corners the extensions (08) are arranged to rise radially outwards from the cylinder axis (06).

12. Pressure vessel according to one of the preceding claims, **characterized in that** the extensions (08) are integrated in the manner of protuberances with uniform and bend-free transitions into the outer shape at least of the hollow-cylinder-shaped vessel part (04).

13. Pressure vessel according to one of the preceding claims, **characterized in that** at least the concrete jacket (07) of the pressure vessel (01) is pretensioned (14) in a direction parallel to the cylinder axis (06).

## Revendications

1. Récipient sous pression (01) comprenant une partie de récipient de forme cylindrique creuse (04) disposée entre un dessus de récipient (02) et une base de récipient (03), constituée d'une enveloppe de béton (07), dont l'axe de cylindre (06) s'étend depuis le dessus de récipient (02) le long de l'axe du récipient sous pression (01) jusqu'à la base de récipient (03), la partie de récipient de forme cylindrique creuse (04) entourant un espace interne de récipient (05) qui est fermé par le dessus de récipient (02) et par la base de récipient (03),
**caractérisé en ce que**
la partie de récipient de forme cylindrique creuse (04) présente, dans une section transversale s'étendant perpendiculairement à l'axe de cylindre (06), au moins trois saillies (08) réparties uniformément sur la périphérie de l'enveloppe de béton (07) et faisant saillie debout vers l'extérieur radialement depuis l'axe de cylindre (06), lesquelles sont réalisées de manière saillant debout dans une mesure telle qu'au moins depuis l'extrémité libre (09) de chaque saillie (08), au moins les extrémités libres (09) des deux saillies immédiatement adjacentes dans la direction périphérique (08) puissent être vues en ligne droite au-delà de la surface d'enveloppe (10) de l'enveloppe de béton (07), des organes de serrage linéaires (11) étant disposés entre des saillies adjacentes dans la direction périphérique (08), lesquels appliquent une précontrainte orientée radialement depuis l'extérieur vers l'axe de cylindre (06) et agissant dans la direction périphérique et à l'encontre d'une surpression dans l'espace interne de récipient (05) sur la partie de récipient de forme cylindrique creuse (04),
et **en ce qu'**il présente un certain nombre n de saillies (08) dans une section transversale perpendiculaire à l'axe de cylindre (06), et **en ce que** dans un premier plan en section transversale s'étendant perpendiculairement à l'axe de cylindre (06), des organes de serrage linéaires (11') sont serrés entre des premières paires de saillies adjacentes (08'), et dans un deuxième plan en section transversale adjacent s'étendant perpendiculairement à l'axe de cylindre (06), des organes de serrage linéaires (11") sont serrés entre des deuxièmes paires de saillies adjacentes (08"), les premières paires de saillies adjacentes (08'), entre lesquelles sont serrés les organes de serrage (11') dans le premier plan en section transversale, étant tournées d'un angle de 360°/n autour de l'axe de cylindre (06) par rapport aux deuxièmes paires de saillies adjacentes (08") entre lesquelles sont serrés les organes de serrage (11") dans le deuxième plan en section transversale.

2. Récipient sous pression selon la revendication 1,
**caractérisé en ce**
**qu'**entre les saillies adjacentes (08) sont prévues des parties courbes de pression (12).

3. Récipient sous pression selon l'une quelconque des revendications précédentes,
**caractérisé en ce que**
l'enveloppe de béton (07) possède une armature lâche (15).

4. Récipient sous pression selon l'une quelconque des revendications précédentes,
**caractérisé par**
une configuration intégrale de l'enveloppe de béton (07) et des saillies (08) de la partie de récipient de forme cylindrique creuse (04).

5. Récipient sous pression selon l'une quelconque des revendications précédentes,
**caractérisé par**
une protection thermique des organes de serrage linéaires (11).

6. Récipient sous pression selon l'une quelconque des revendications précédentes,
**caractérisé par**
une enceinte (13) du récipient sous pression (01).

7. Récipient sous pression selon l'une quelconque des revendications précédentes,
**caractérisé en ce que**
les saillies (08) sont réalisées de manière saillant debout en forme de poinçon sur l'enveloppe de béton (07).

8. Récipient sous pression selon l'une quelconque des revendications précédentes,
**caractérisé en ce que**
les saillies (08), considérées en section transversale perpendiculairement à l'axe de cylindre (06), vues depuis l'enveloppe de béton (07), se rétrécissent jusqu'à leurs extrémités libres (09).

9. Récipient sous pression selon l'une quelconque des revendications précédentes,
**caractérisé en ce que**
l'enveloppe de béton (07) présente une section transversale intérieure circulaire ronde perpendiculaire à l'axe de cylindre (06).

10. Récipient sous pression selon l'une quelconque des revendications précédentes,
**caractérisé par**
un moyen accumulateur de chaleur logé dans l'espace interne de récipient (05).

11. Récipient sous pression selon l'une quelconque des revendications précédentes,
**caractérisé en ce que**
l'enveloppe de béton (07) présente, perpendiculairement à l'axe de cylindre (06), une section transversale extérieure en forme de polygone régulier, au niveau des coins duquel les saillies (08) sont disposées de manière à faire saillie debout radialement vers l'extérieur depuis l'axe de cylindre (06).

12. Récipient sous pression selon l'une quelconque des revendications précédentes,
**caractérisé en ce que**
les saillies (08) sont intégrées de manière équilibrée avec des transitions uniformes et sans angles dans la configuration extérieure d'au moins la partie de récipient de forme cylindrique creuse (04).

13. Récipient sous pression selon l'une quelconque des revendications précédentes,
**caractérisé en ce**
**qu'**au moins l'enveloppe de béton (07) du récipient sous pression (01) est précontrainte (14) dans la direction parallèle à l'axe de cylindre (06).
